# EUROPÄISCHE PATENTSCHRIFT

(11) **EP 1 035 325 B1**
(45) Veröffentlichungstag und Bekanntmachung des Hinweises auf die Patenterteilung: **25.08.2004**
(21) Anmeldenummer: 00104865.1
(22) Anmeldetag: 07.03.2000
(51) Int. Cl.: F03D 11/04, F03D 9/00, F03D 7/02

(54) **Mobile Vorrichtung zur Nutzung der Windenergie**
Transportable wind turbine
Eolienne transportable

(30) Priorität: 09.03.1999 DE 19910200
(43) Veröffentlichungstag der Anmeldung: 13.09.2000
(73) Patentinhaber: Irps, Hartwig, Dr.-Ing., D-38159 Vechelde (DE)
(72) Erfinder: Irps, Hartwig, Dr.-Ing., D-38159 Vechelde (DE)

(56) Entgegenhaltungen:
- DE-A- 3 224 976
- DE-A- 3 405 466
- FR-A- 2 520 814
- FR-A- 2 752 443
- US-A- 5 244 346

## Beschreibung

Die Erfindung betrifft eine "Mobile Vorrichtung zur Nutzung der Windenergie". gemäß den Oberbegriffen der Ansprüche 1 und 2. Solche Vorrichtunge sind aus DE 34 05 466 A1 und DE 1 964 6612 11 bekannt. Hierfür wird eine mit Rädern versehene Platform so aufgebaut, damit die auf der mobilen Plattform installierten Windkraftaufnehmer jeweils in optimaler Windposition stehen können. Entweder dreht sich die Plattform in die Windrichtung oder die Plattform wird ortsfest aufgestellt und die Windkraftaufnehmer sind drehbar auf einem Drehkranz installiert. Mit Rädern versehene Plattformen werden an Land und mit Schwimmkörpern versehene Plattformen werden auf dem Wasser eingesetzt.

### Stand der Technik

Die Luftströmung wird vom Menschen seit Jahrtausenden als erneuerbare Energiequelle genutzt.

Im einfachsten Fall bestehen die Energieaufnehmer aus ebenen oder gekrümmten Flächen, die an einer rotierenden horizontalen oder vertikalen Achse zur Bereitstellung von mechanischer Energie, häufig genutzt zum Pumpen von Wasser, dem Menschen als Kraftmaschinen dienen. Erst mit dem technischen Zeitalter und der mathematischen Betrachtung der Vorgänge an Strömungskörpern wurden die heute eingesetzten Windkraftanlagen möglich, die in der Regel zur Bereitstellung elektrischer Energie eingesetzt werden. Zur Aufnahme der Windkräfte an den Windkraftanlagen sind entsprechende Verankerungen im Boden (armierte Betonfundamente) erforderlich.

In DE 42 02 951 A1 und DE-PS 24 501 wird vorgeschlagen, ein Nutzfahrzeug mit einem Windenergiekonverter auszurüsten. Die jeweiligen Gesamtsysteme sind vorrangig für die Energietransformation und Arbeitsleistung zum Zwecke der Ortsveränderung vorgesehen und berührt nicht die vorliegende Konstruktionsart.

In DE 32 24 976 A1 werden schwimmfähige Plattformen mit Segment-Elementen für die großtechnische Offshore-Nutzung vorgeschlagen. Dieser Vorschlag mit seinen austauschbaren Schwimmelementen unterscheidet sich zur vorliegenden Konstruktionsart.

In DE 34 05 466 A1 steht die Nutzung der Solarenergie im ortsveränderlichen Baukastensystem im Vordergrund und unterscheidet sich zur vorliegenden Konstruktionsart.

Kennzeichen des Patents DE 196 46 612 C1 ist ein drehbarer Turm mit starrer Befestigung von Rotor, Generator, Windfahne und Energiespeicher. Diese Anlage, die vorrangig zum Laden von Batterien entworfen wurde, ist auch für den Transport geeignet, unterscheidet sich aber in wesentlichen Merkmalen von der vorliegenden Konstruktionsart, wie in den folgenden Patentansprüchen beschrieben wird.

### Aufgabe der Erfindung

Die Erfindung soll es ermöglichen, Windkraftanlagen mit geringen Leistungen mobil einzusetzen. Mit dem mobilen Aufbau soll der Einsatz an verschiedenen Orten möglich sein. Die Plattform soll auch als Träger weiterer emeuerbarer oder fossiler Energiewandler genutzt werden können. Eine ausreichende Sturmsicherung soll vorhanden sein.

Diese Aufgabe wird mit einer mobilenVorrichtung gemäß den Ansprüchen 1 und 2 gelöst.

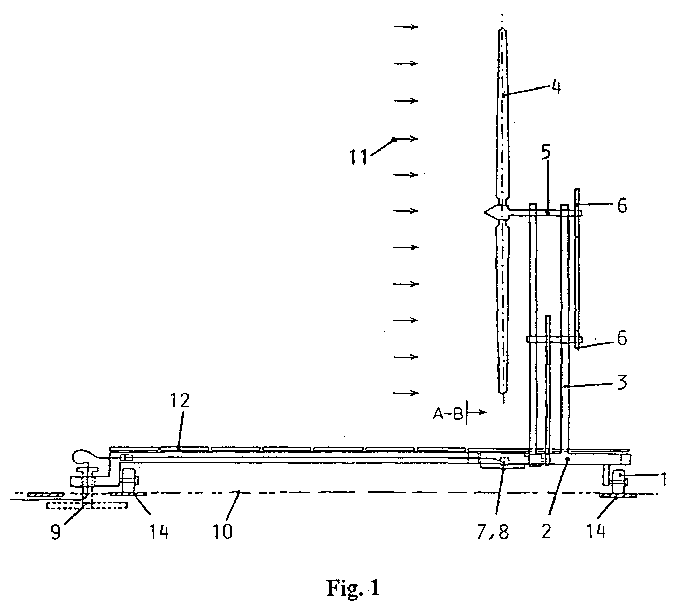

- Fig. 1:: Ein Windkraftaufnehmer (Rotor) auf der Plattform; Seitenansicht.
- Fig. 2:: Vorderansicht A-B aus Fig. 1 mit drei Windkraftaufnehmern.
- Fig. 3:: Zwei Windkraftaufnehmer auf einer Plattform wirken auf eine Antriebsachse.

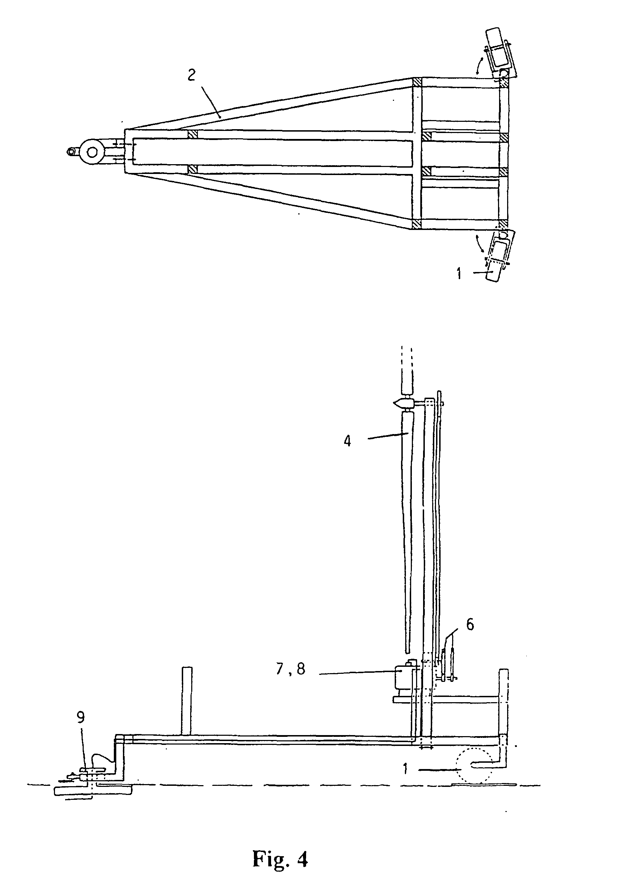

- Fig. 4:: Seitenansicht und Draufsicht zu Fig.3.

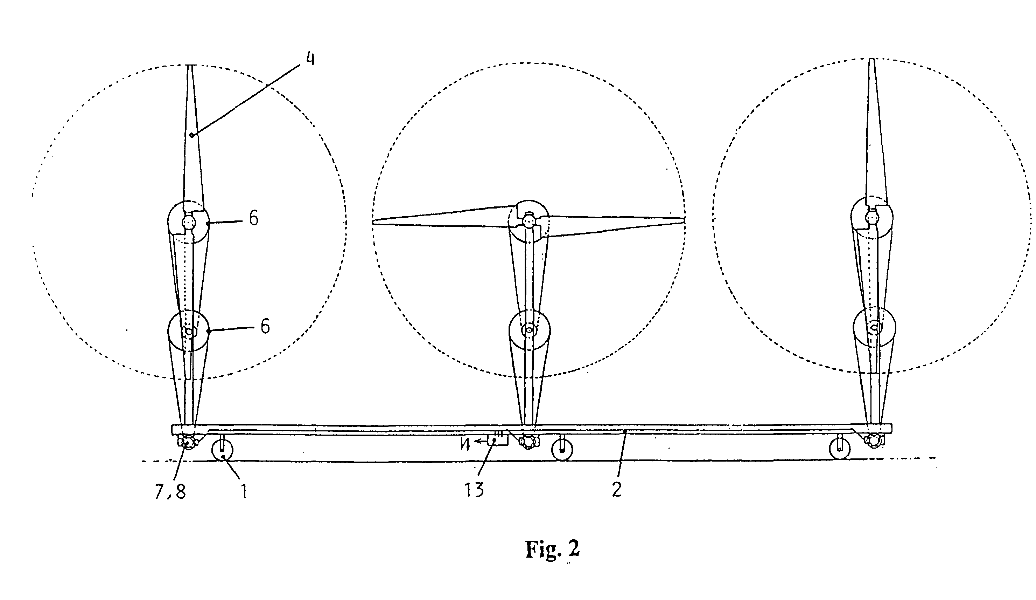

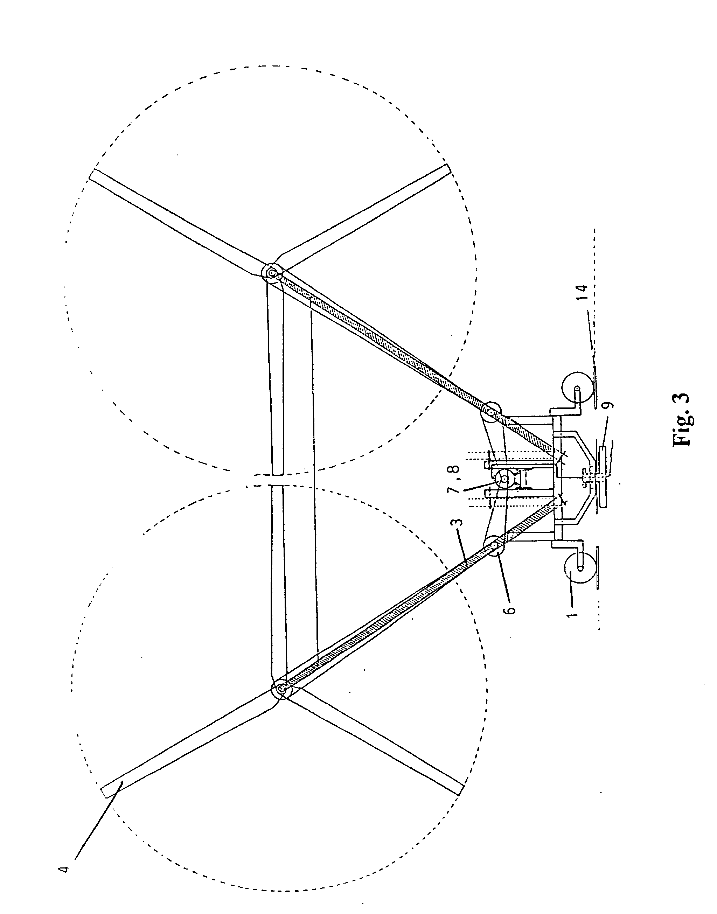

Ein mit Rädern **1** versehenes Fahrgestell **2** wird so aufgebaut, damit es sich durch die Windkraft um eine ortsfeste Fixierung **9** (Drehpunkt) auf einem Aussenkreis **14** drehen kann. Die dafür erforderlichen Räder rollen auf einer befestigten Fahrbahn **14**, oder auch auf einer Schiene, ab. Die ortsfeste Fixierung **9** wird im einfachsten Fall mit Bodenankern vorgenommen. Das Fahrgestell **2** ist mit Aufbauten **3** versehen, um daran die erwünschten Windkraftaufnehmer **4** , z.B. mit horizontaler Achse **5**, zu befestigen. Drehpunkt und Turmfuß stehen in einem Abstand zueinander, was somit einen Hebelarm zur Windausrichtung ergibt. Mit dem Fahrgestell **2** wird es möglich, auch mehrere Windkraftaufnehmer **4**, siehe Fig. 2 und 3, nebeneinander zu installieren. Die von den Windkraftaufnehmern **4** betriebenen Energiewandler **7,8** (z.B. Stramgenerator oder Wasserpumpe) werden aus Gründen der Standfestigkeit in Bodennähe auf dem Fahrgestell installiert. Die mobile Vorrichtung ermöglicht es, bei Bedarf an einem anderen Ort betrieben zu werden. Entsprechend können die Räder **1** auch als Transporträder genutzt werden. Das Fahrgestell **2** kann für die Installation zusätzlicher Energien erneuerbarer (z.B. Photovoltaik-Module **12**) oder nicht erneuerbarer (z.B. Dieselmotor) Art genutzt werden. Auch können Schaltkästen **13** und Energiespeicher (Batterien) auf der Plattform installiert werden. Zur Verstärkung der Windkraft **11** können am Fahrgestell **2** auch entsprechende Umhüllungen und Windtrichter montiert werden. Zusätzlich können Vorrichtungen zur Sturmsicherung (z.B.Turmneigung) leicht installiert werden. Mit **10** wird der natürliche Boden bezeichnet.

Ohne gezeigte Figuren ist es auch möglich, auf der Plattform mittels eines Drehkranzes den Aufbau der Systemkomponenten nach dem gleichen Prinzip vorzunehmen. Drehpunkt und Turmfuß stehen auch hier in einem Abstand zueinander, was somit einen Hebelarm zur Windausrichtung ergibt. Auch hier empfiehlt es sich, die Nutzenergiewandler aus Gründen der Standsicherheit in Bodennähe auf dem Drehkranz zu installieren. Die Plattform wird bei dieser Variante am Boden abgestützt, horizontal ausgerichtet und verankert.

Beide Konstruktionsarten - drehbare Plattform oder Plattform mit Drehkranz - können auch schwimmend betrieben werden. Die Plattform ist dann mit Schwimmkörpern zu versehen.

## Patentansprüche

1. **Mobile Vorrichtung zur Nutzung der Windenergie,**
mit einer mit Rädern (1) und Aufbauten (3) versehenen Plattform (2), mit an der Plattform und/oder seinen Aufbauten befestigten Luftleitflächen zur Beeinflussung der Windgeschwindigkeit, mit Bauelementen auf der Plattform zur Energiebereitstellung aus anderen Energiequellen als der Windkraft, mit einem oder mehreren Windkraftaufnehmern (4) beliebiger Bauart, die auf der Plattform (2) derart installiert sind, dass der/die Windkraftaufnehmer (4) ihre Position zur mit Rädern (1) versehenen Plattform (2) zwecks Sturmsicherung verändern können, wobei an der Plattform (2) zusätzliche passive oder aktive Bauelemente zur Drehung in oder aus den Wind angebracht sind,
**dadurch gekennzeichnet, dass**
der oder die Nutzenergiewandler (7,8) in Bodennähe auf der Plattform (2) installiert und mit geeigneten Verbindungselementen (6) mit den Windkraftflächen (4) verbunden ist/sind, die Plattform (2) am Boden derart drehbar fixierbar (9) ausgebildet ist, dass sie durch die Windkraft (11) bis zur Ausrichtung in den Wind ein Drehmoment erfährt und dass die frei zugängliche Drehachse (9) der Plattform derart ausgebildet ist, dass durch sie die Energieableitung erfolgt.

2. **Mobile Vorrichtung zur Nutzung der Windenergie**
mit einer mit Rädern (1) und Aufbauten (3) versehenen Plattform (2), mit an der Plattform und/oder seinen Aufbauten befestigten Luftleitflächen zur Beeinflussung der Windgeschwindigkeit, mit Bauelementen auf der Plattform zur Energiebereitstellung aus anderen Energiequellen als der Windkraft, wobei auf der Plattform ein Drehkranz befestigt ist, auf dem Drehkranz ein oder mehrere Windkraftaufnehmer beliebiger Bauart derart installiert sind, dass der/die Windkraftaufnehmer (4) ihre Position zum Drehkranz zwecks Sturmsicherung verändern kann/können, die Plattform derart ausgebildet ist, dass sie am Erdboden ortsfest fixierbar ist und der Drehkranz durch die Windkraft bis zur Ausrichtung in den Wind ein Drehmoment erfährt und der Drehkranz durch zusätzliche passive oder aktive Bauelemente zur Drehung in oder aus den Wind ausgebildet ist,
**dadurch gekennzeichnet, dass**
der oder die Nutzenergiewandler in Bodennähe auf dem Drehkranz installiert und mit geeigneten Verbindungselementen mit den Windkraftflächen verbunden ist/sind, und dass die frei zugängliche Drehachse des Drehkranzes derart ausgebildet ist, dass durch sie die Energieableitung erfolgt.

3. **Mobile Vorrichtung zur Nutzung der Windenergie nach Anspruch 1 oder 2,**
**dadurch gekennzeichnet,**
**dass** an der Plattform Schwimmkörper angebracht sind und die Drehachse zur Verankerung ausgebildet ist.

## Claims

1. **Mobile device for utilisation of wind energy,**
with a platform (2), provided with wheels (1) and superstructures (3), with air guide vanes for influencing the wind velocity attached on the platform and/or its superstructures, with components on the platform for generation of energy from energy sources other than wind power, with one or more wind power transducers (4) of any design installed on the platform (2) in such a manner that the wind force transducer(s) (4) is or are able to vary its or their position with respect to the platform (2), provided with wheels (1), for the purpose of stormproofing, whereby additional passive or active components for rotation into or out of the wind are attached on the platform (2),
**characterised in that**:
the useful energy converter(s) (7, 8) is or are installed near to the ground on the platform (2) and is or are connected with suitable connection elements (6) to the wind power vanes (4), that the platform (2) is designed at the bottom to be able to be fixed (9) so that it can rotate in such a manner that the wind power (11) moves the platform by applying a torque for aiming it into the wind and that the freely accessible pivot axis (9) of the platform is designed in such a manner that energy is transferred through the pivot axis of the platform.

2. **Mobile device for utilisation of wind energy,**
with a platform (2), provided with wheels (1) and superstructures (3), with air guide vanes for influencing the wind velocity attached on the platform and/or its superstructures, with components on the platform for generation of energy from energy sources other than wind power, whereby a slewing rim is mounted on the platform, one or more wind power transducers of any design is or are installed on the slewing rim in such a manner than the wind power transducer(s) (4) is or are able to vary its or their position with respect to the slewing rim for stormproofing, the platform is designed in such a manner that it can be fixed in stationary manner on the ground and the wind power moves the slewing rim by applying a torque until aligned into the wind and the slewing rim is designed with additional passive or active components for turning into or out of the wind,
**characterised in that**:
the useful energy converter(s) is or are installed near to the ground on the slewing rim and is or are connected with suitable connection elements to the wind power vanes and that the freely accessible pivot access of the slewing rim is designed in such a manner that energy is transferred through the pivot axis.

3. **Mobile device for utilisation of wind energy in accordance with Claim 1 or 2,**
**characterised in that**
floats are attached to the platform and the pivot axis is designed for anchoring.

## Revendications

1. **Dispositif mobile pour l'exploitation de l'énergie éolienne,**
avec une plateforme (2) équipée de roues (1) et des installations (3), avec des déflecteurs d'air fixés à la plateforme et/ou à ses installations pour influencer la vitesse du vent, avec des composants sur la plateforme pour la mise à disposition de l'énergie à partir de sources d'énergie autres que l'énergie éolienne, avec un ou plusieurs capteurs d'énergie éolienne (4) de types divers, qui sont installés sur la plateforme (2) de telle façon que le/les capteurs d'énergie éolienne (4) puissent modifier leur position par rapport à la plateforme (2) équipée de roues (1) pour la protection contre les tempêtes, des composants supplémentaires passifs ou actifs sont alors disposés sur la plateforme (2) pour la rotation dans ou contre le vent,
**caractérisé par**
le ou les convertisseurs en énergie recouvrable (7,8) installés à proximité du sol sur la plateforme (2) et avec des éléments de liaison appropriés (6) est/sont reliés aux déflecteurs d'air (4), la plateforme (2) est formée au sol de manière pivotable et fixable (9), de telle façon qu'elle subisse un couple par la force éolienne (11) jusqu'à l'orientation dans le sens du vent et que l'axe de rotation librement accessible (9) de la plateforme soit conçu de telle façon, qu'il puisse véhiculer l'énergie.

2. **Dispositif mobile pour l'exploitation de l'énergie éolienne**
avec une plateforme (2) équipée de roues (1) et des installations (3), avec des déflecteurs d'air fixés à la plateforme et/ou à ses installations pour influencer la vitesse du vent, avec des composants sur la plateforme pour la mise à disposition de l'énergie à partir de sources d'énergie autres que l'énergie éolienne, une couronne de pivotement est alors fixée sur la plateforme, un ou des capteurs d'énergie éolienne de types divers est/sont montés sur la couronne de pivotement de telle façon que le/les capteurs d'énergie éolienne (4) puissent modifier leur position par rapport à la couronne de pivotement pour des questions de protection contre les tempêtes, la plateforme est conçue de telle façon qu'elle est fixable de manière stationnaire sur le sol et que la couronne de pivotement subisse un couple par la force éolienne jusqu'à l'orientation dans le sens du vent et la couronne de pivotement est formée de composants supplémentaires passifs ou actifs pour la rotation dans ou contre le vent,
**caractérisé par**
le ou les convertisseurs en énergie recouvrable installés à proximité du sol sur la couronne de pivotement et avec des éléments de liaison appropriés est/sont reliés aux déflecteurs d'air, l'axe de rotation librement accessible de la couronne de pivotement est conçu de telle façon, qu'il puisse véhiculer l'énergie.

3. **Dispositif mobile pour l'exploitation de l'énergie éolienne selon droit 1 ou 2,**
**caractérisé par,**
**le fait que** des corps flottants sont disposés sur la plateforme et que l'axe de rotation est formé par rapport à l'ancrage.
